# EUROPÄISCHE PATENTSCHRIFT

(11) **EP 2 296 931 B1**
(45) Veröffentlichungstag und Bekanntmachung des Hinweises auf die Patenterteilung: **24.04.2013**
(21) Anmeldenummer: 09779963.9
(22) Anmeldetag: 26.06.2009
(51) Int. Cl.: B60L 5/28, B60L 3/04

(54) **STROMABNEHMERANORDNUNG**
PANTOGRAPH APPARATUS
SYSTÈME DE PRÉLÈVEMENT DE COURANT

(30) Priorität: 11.07.2008 DE 102008032591
(43) Veröffentlichungstag der Anmeldung: 23.03.2011
(73) Patentinhaber: Bombardier Transportation GmbH, 10785 Berlin (DE)
(72) Erfinder: TESSMER, Wolfram, 13587 Berlin (DE); KREMLACEK, Johannes, 16548 Glienicke/Nordbahn (DE); MAASS, Jörg-Torsten, 16515 Oranienburg-Eden (DE)
(74) Vertreter: Cohausz & Florack
(86) Internationale Anmeldenummer: PCT/EP2009/058031
(87) Internationale Veröffentlichungsnummer: WO 2010/003834

(56) Entgegenhaltungen:
- DE-A1- 3 926 109
- JP-A- 58 099 202
- US-A- 2 262 413
- US-A- 2 436 301

## Beschreibung

Die vorliegende Erfindung betrifft eine Stromabnehmeranordnung für ein Schienenfahrzeug mit mindestens einem Stromabnehmer und mit einem Trennermodul, das ein über ein erstes Ende elektrisch mit dem Stromabnehmer verbundenes Trennmesser aufweist. Die Erfindung betrifft ferner ein Schienenfahrzeug mit einer ebensolchen Stromabnehmeranordnung.

Stromabnehmer dienen der Übertragung elektrischer Energie von einer Strom führenden Fahr- oder Oberleitung zu den elektrischen Einrichtungen eines Fahrzeugs, typischerweise eines Schienenfahrzeugs oder eines Oberleitungsbusses. Die Oberleitung wird oftmals mit einer Betriebsspannung von mehreren Kilovolt betrieben, bei Straßenbahnen zuweilen mit einer Betriebsspannung von mehreren hundert Volt. Diese Oberleitungsspannung, welche üblicherweise eine Hochspannung ist, wird im Betrieb vom Stromabnehmer abgegriffen und von diesem aus an verschiedene Bauteile des Schienenfahrzeugs weitergeleitet, welche mit dieser Hochspannung betrieben werden. Hierzu kann der Antrieb des Schienenfahrzeugs zählen, aber auch Bauteile wie Hauptschalter, Transformatoren sowie Strom- oder Spannungswandler. Der Stromabnehmer ist bei einigen Schienenfahrzeugen nicht permanent mit diesen Bauteilen elektrisch verbunden, sondern über Trenner, welche die Verbindung schließen und trennen können. Eine getrennte elektrische Verbindung ist eine geöffnete elektrische Verbindung. Der Trenner dient unter anderem dazu, diese Komponenten des Schienenfahrzeugs vom Stromabnehmer und dadurch von einer Hochspannung zu trennen.

Ein Trenner kann auch die Funktion eines Erdungstrennschalters einschließen. Hierbei kann nicht nur eine elektrische Verbindung zwischen zwei Polen geschlossen und geöffnet werden, sondern es kann auch einer der beiden Pole mit Masse oder einer Erdung elektrisch verbunden werden. Dadurch kann das mit diesem Pol elektrisch verbundene Bauteil, in diesem Fall der Stromabnehmer, geerdet werden, was für die betriebliche Erdung einzelner Stromabnehmer sowie für die Durchführung von Wartungs- oder Reparaturarbeiten notwendig ist. Ein Trenner, wie er für Stromabnehmer verwendet wird, umfasst üblicherweise ein elektrisch leitendes Trennmesser, welches durch eine Bewegung mit einem Kontakt eines Pols in Berührung gebracht wird oder von dem Kontakt dieses Pols wegbewegt wird. Sowohl das Trennmesser wie auch die Kontakte sind vorzugsweise aus Metall gefertigt. Das Öffnen und Schließen der elektrischen Verbindung geschieht somit auf einem mechanischen Wege.

Die elektrische Verbindung, die der Trenner schließen und öffnen kann, kann zu bestimmten Zeiten unter Hochspannung stehen. Insbesondere kann sie unter der vom Stromabnehmer abgegriffenen Oberleitungsspannung stehen. Diese Hochspannung wird von dem Bereich des Schienenfahrzeugs, in dem sich Geräte, die nicht für Hochspannung ausgelegt sind, und Menschen befinden können, isoliert. Wegen der hierzu benötigten Isolationsabstände befinden sich die Trenner oft auf dem Dach des Schienenfahrzeugs. Dies ist in vielerlei Hinsicht problematisch: Einerseits ist ein insgesamt nach Möglichkeit niedriges Fahrzeug wünschenswert, da sich durch eine geringe Höhe die Aerodynamik verbessert und beispielsweise niedrige Tunnel oder Unterführungen befahren werden können, welche für höhere Fahrzeuge nicht passierbar sind. Andererseits ist es erstrebenswert, bei einer gegebenen Fahrzeughöhe einen möglichst großen Anteil dieser Höhe für den Innenraum des Fahrzeuges zur Verfügung zu haben und umgekehrt einen möglichst geringen Anteil für die Dachkonstruktion vorsehen zu müssen, da sich durch einen größeren Innenraum der zur Verfügung stehende Nutzraum insbesondere für die Fahrgäste erhöht. Darüber hinaus beeinträchtigen Konstruktionen auf dem Dach aufgrund ihrer strömungsungünstigen Form die Aerodynamik in stärkerem Maße, als es bei einer entsprechenden Erhöhung des Daches der Fall wäre.

Die französische Offenlegungsschrift FR 02865973 A1 beschreibt einen in den Grundrahmen eines Stromabnehmers integrierten Trenner mit der Funktionalität eines Erdtrennschalters. Dieser umfasst ferner einen Spannungsmesser und einen Überspannungsschutz.

Dieser Stand der Technik weist allerdings den Nachteil auf, dass separate Komponenten für unterschiedliche Antriebsenergiearten zur Durchführung der Schaltbewegung des Trennmessers einerseits und zur Durchführung der Stromabnehmerbewegung andererseits vorgesehen sein müssen. Das Trennmesser sollte schon alleine wegen seiner Position auf dem Dach des Schienenfahrzeugs nicht von Hand geschaltet werden müssen. Es muss also eine Möglichkeit vorgesehen sein, die für diese Bewegung notwendige Energie zur Verfügung zu stellen. Dies aber benötigt zusätzlichen Raum welcher noch dazu konstruktionsbedingt häufig auf dem Dach vorgesehen werden muss.

Es ist daher die Aufgabe der vorliegenden Erfindung, eine Stromabnehmeranordnung der beschriebenen Art dahingehend weiterzubilden, dass der für die Bereitstellung der Antriebsenergie benötigte Raum minimiert wird.

Die zuvor hergeleitete und aufgezeigte Aufgabe wird bei einer Stromabnehmeranordnung der eingangs genannten Art dadurch gelöst, dass mindetens ein Antrieb vorgesehen ist, über den der Stromabnehmer und das Trennmesser des Trennermoduls mit derselben Antriebsenergieart beaufschlagbar sind.

Der Strimabnehmerund das Trennmesser dabei einen gemeinsamen Antrieb auf weisen. Der Antrieb ist im erfindungsgemäßen Sinne ein Bauteil oder System, das aus einer bereitgestellten Hilfsenergie, im Folgenden auch Antriebsenergie genannt, eine mechanische Bewegung des Stromabnehmers bzw. des Trennermoduls generiert. Die Mittel zur Erzeugung der Hilfsenergie sind Bestandteil des Schienenfahrzeugs.

Da der Stromabnehmer bewegt werden muss, um entweder durch ein Heben des Stromabnehmers einen Kontakt zur Oberleitung herzustellen oder durch ein Senken des Stromabnehmers diesen Kontakt zu unterbrechen, muss zu diesem Zweck ohnehin ein Antrieb für eine entsprechende Antriebsenergieart vorgehalten werden. Indem diese Antriebsenergieart auch für das Trennmesser des Trennermoduls verwendet wird, kann der im Stand der Technik für die Bereitstellung einer separaten Antriebsenergieart für das Trennermodul notwendige Raum fast vollständig eingespart werden. Vorzugsweise sind dann nur noch Vorrichtungen zur Verwendung einer einzigen Antriebsenergieart oder aber nur ein einziger Antrieb notwendig. Insgesamt verringert sich damit das Volumen und Gewicht der Komponenten auf dem Dach des Schienenfahrzeugs, wodurch auch die Aerodynamik des Schienenfahrzeugs verbessert wird.

Bei den möglichen Antriebsenergiearten handelt es sich beispielsweise um hydraulische Antriebsenergie, pneumatische Antriebsenergie oder elektrische Antriebsenergie. Ein hydraulischer Antrieb weist Vorzugsweise, aber nicht ausschließlich, einen Wasser- oder Ölkompressor, eine Druckleitung für Wasser oder Öl, einen Wasser- oder Öltank und/oder ein Zylindersystem auf. Ein pneumatischer Antrieb weist vorzugsweise, aber nicht ausschließlich, einen Luftkompressor, eine Leitung für Druckluft, einen Luftspeicher oder zumindest einen Lufteinlass, und/oder ein Zylindersystem auf. Ein elektrischer Antrieb kann unter anderem einen Elektromotor, eine Batterie und/oder einen Akkumulator aufweisen.

Beispielsweise kann sowohl das Trennmesser als auch der Stromabnehmer von einem einzigen hydraulischen Antrieb bewegt werden, oder das Trennmesser und der Stromabnehmer können von zwei verschiedenen Ölkompressoren mit getrennten Druckleitungen und Zylindersystemen bewegt werden, welche aber beide denselben Öltank und damit trotzdem dieselbe Antriebsenergieart verwenden. Entsprechendes gilt gleichermaßen bei Verwendung ausschließlich der pneumatischen bzw. elektrischen Antriebsenergieart.

Bei dem Fahrzeug im Sinne der Erfindung kann es sich um ein Schienenfahrzeug wie etwa einen Schnellzug oder eine Straßenbahn handeln. Es kann sich allerdings auch um ein anderes Fahrzeug handeln, welches Strom aus einer Oberleitung bezieht, beispielsweise um einen Oberleitungsbus. Bei dem Stromabnehmer kann es sich um einen Scherenstromabnehmer oder um einen Einholmstromabnehmer handeln. Der Stromabnehmer weist vorzugsweise einen Bügel mit Schleifstück auf, mit dem der Kontakt zur Oberleitung hergestellt wird.

Ein Grundrahmen, auf dem der Stromabnehmer befestigt ist, kann vom Fahrzeugdach durch Isolatoren getrennt sein, oder die Isolatoren können sich im Gestänge des Stromabnehmers befinden. Das Trennermodul ist ein Bauelement mit einem Trenner. Das Trennermodul kann ausschließlich aus einem Trenner bestehen, aber es kann auch aus einem Trenner und weiteren Bauteilen bestehen. Das Trennermodul kann sich auf demselben Grundrahmen wie der Stromabnehmer befinden. Der Trenner hat mindestens zwei Pole, zwischen denen eine elektrische Verbindung durch eine mechanische Bewegung des Trennmessers geschlossen oder geöffnet werden kann. Bei dem Material des Trennmessers kann es sich um Metall handeln.

Gemäß einer Ausgestaltung der erfindungsgemäßen Stromabnehmeranordnung ist vorgesehen, dass das Trennmesser mit dem Stromabnehmer über ein Verbindungselement verbunden ist, sodass die Arbeitsbewegung des Stromabnehmers automatisch mit der Bewegung des Trennmessers stattfinden kann. Das bedeutet insbesondere, dass das Heben des Stromabnehmers ein Schließen und umgekehrt ein Senken des Stromabnehmers ein Öffnen des Trennermoduls bewirkt. Dabei schließt sich das Trennermodul vorzugsweise, bevor der Stromabnehmer während des Hebevorganges über den Bügel mit dem Schleifstück die Oberleitung berührt. Entsprechend hierzu öffnet sich das Trennermodul während des Senkvorganges vorzugsweise erst, nachdem der Stromabnehmer mit dem Schleifstück am Bügel die Oberleitung nicht mehr berührt. Vorangehend wird eine räumliche Zwangsstaffelung beschrieben. Alternativ ist auch eine zeitliche Zwangsstaffelung denkbar, beispielsweise derart, dass die Bewegung des Trennmessers über ein Zeitrelais den Antrieb des Stromabnehmers zeitverzögert aktiviert. Des weiteren ist eine logische Staffelung denkbar, beispielsweise derart, dass erst die Bewegung des Trennmessers den Antrieb bzw. die Bewegung des Stromabnehmers freischaltet.

Wenn der Stromabnehmer gesenkt wird, ist er nicht mehr mit der Oberleitung in Berührung und wird folglich nicht mehr mit der Oberleitungsspannung versorgt. In diesem Zustand können auch die Hochspannungskomponenten des Schienenfahrzeugs nicht mehr mit der Oberleitungsspannung versorgt werden, also kann deren elektrische Verbindung zum Stromabnehmer getrennt werden, indem das Trennermodul durch eine Bewegung des Trennmessers in den geöffneten Zustand geführt wird. Es kann in diesem Zustand der Spannungsabnehmer auch zusätzlich geerdet werden, um sicherzustellen, dass er sich auf Massepotenzial befindet.

Wenn der Stromabnehmer andererseits gehoben wird, berührt er die Oberleitung und wird dadurch üblicherweise mit der Oberleitungsspannung versorgt. Wenn in diesem Zustand die Hochspannungskomponenten des Schienenfahrzeugs mit der Oberleitungsspannung versorgt werden sollen, sollte entsprechend die elektrische Verbindung zum Stromabnehmer geschlossen werden, indem das Trennermodul durch eine Bewegung des Trennmessers in den geschlossenen Zustand geführt wird. Es sollte in diesem Zustand möglichst keine Erdung des Stromabnehmers bestehen. Durch die Verbindung zwischen Stromabnehmer und Trennmesser wird verhindert, dass das Trennmesser bei gehobenem Stromabnehmer einen geerdeten Pol berührt. Die gewünschte Position des Trennmessers ist also durch die Position des Stromabnehmers festgelegt.

Die Verbindung zwischen dem Stromabnehmer und dem Trennmesser kann aus einer mechanischen Verbindung bestehen. Wird der Stromabnehmer gehoben, so wird mittels dieser mechanischen Verbindung das Trennmesser in die geschlossene Stellung gebracht. Wird der Stromabnehmer gesenkt, so wird mittels dieser mechanischen Verbindung das Trennmesser in die offene oder in die geerdete Stellung zurück gebracht. Insbesondere weist die mechanische Verbindung eine Konstruktion auf, welche eine Bewegung des Stromabnehmers in eine Bewegung des Trennmessers umsetzt und umgekehrt. Diese Konstruktion kann eine einzelne, insbesondere gelenkig gelagerte, Verbindungsstange zwischen dem Stromabnehmer und dem Trennmesser, aber auch ein auf dem Dach des Schienenfahrzeugs abgestütztes Hebelsystem aufweisen. Die Verbindung zwischen dem Stromabnehmer und dem Trennmesser kann auch unter Verwendung einer oder mehrerer Federn erfolgen. Es kann das Trennmesser auch unmittelbar am Stromabnehmer befestigt sein.

Gemäß einer weiteren Ausgestaltung der erfindungsgemäßen Stromabnehmeranordnung ist vorgesehen, dass ein Antrieb mit dem Stromabnehmer verbunden ist. Der Antrieb bewegt also unmittelbar den Stromabnehmer, wohingegen das Trennmesser über die Verbindung zwischen Stromabnehmer und Verbindungsmesser mitbewegt wird.

Gemäß noch einer weiteren Ausgestaltung der erfindungsgemäßen Stromabnehmeranordnung ist ein Antrieb mit dem Trennmesser verbunden. Der Antrieb bewegt also unmittelbar das Trennmesser, wohingegen der Stromabnehmer über die Verbindung zwischen Trennmesser und Stromabnehmer mitbewegt wird.

Gemäß einer weiteren Ausgestaltung der erfindungsgemäßen Stromabnehmeranordnung ist das Trennermodul zumindest teilweise in den Stromabnehmer integriert. Beispielsweise ist nur das Trennmesser mit der Befestigung seines ersten Endes in den Stromabnehmer integriert. Es könnte auch das Trennermodul vollständig in den Stromabnehmer integriert sein. Es kann also das Trennermodul einen Bestandteil oder ein Modul des Stromabnehmers bilden.

Es ist auch denkbar, dass das Trennermodul zumindest teilweise als Baugruppe an den Stromabnehmer angebaut ist. Beispielsweise könnte nur das Trennmesser mit der Befestigung seines ersten Endes als Baugruppe an den Stromabnehmer angebaut sein. Es könnte auch das Trennermodul vollständig als Baugruppe an den Stromabnehmer angebaut sein. Das Trennermodul kann also für den Platz sparenden An- oder Abbau an den Stromabnehmer vorgesehen sein und definierte Schnittstellen für die Kontaktierung und Befestigung aufweisen.

Gemäß einer weiteren Ausgestaltung ist das Trennmesser des Trenners drehbar gelagert. Ein Ende des Trennmessers ist beweglich an einem ersten Pol verbunden. Durch eine Drehbewegung kann das andere Ende des Trennmessers mit einem zweiten Pol in mechanischen Kontakt gebracht werden, wobei eine elektrische Verbindung geschlossen wird. Im Gegenzug kann ebenfalls durch eine Drehbewegung des Trennmessers der mechanische Kontakt wieder aufgehoben werden, wodurch die elektrische Verbindung unterbrochen wird.

Es ist außerdem denkbar, dass das Trennmesser des Trennermoduls verschiebbar gelagert ist. Wie bereits bemerkt, ist ein Ende des Trennmessers beweglich an einem ersten Pol verbunden. Durch eine Schiebbewegung kann das andere Ende des Trennmessers mit einem zweiten Pol in mechanischen Kontakl gebracht werden, wobei eine elektrische Verbindung geschlossen wird. Im Gegenzug kann ebenfalls durch eine Schiebbewegung des Trennmessers der mechanische Kontakt wieder aufgehoben werden, wodurch die elektrische Verbindung unterbrochen wird. Das Trennmesser kann außerdem in seiner Bewegung sowohl drehbar als auch verschiebbar gelagert sein, also in solcher Weise gelagert sein, dass bei seiner Bewegung eine Kombination aus Drehung und Verschiebung ausgeführt wird.

Gemäß einer wiederum weiteren Ausgestaltung ist ein zweites Ende des Trennmessers im geschlossenen Zustand des Trennermoduls über einen elektrischen Kontakt mit mindestens einer Hochspannungskomponente verbunden. Im geschlossenen Zustand des Trennermoduls steht das zweite Ende des Trennmessers in mechanischem Kontakt mit einem zweiten Pol und ist mit diesem elektrisch verbunden. Mittelbar über diesen Pol kann, gemäß dieser Ausgestaltung, das zweite Ende des Trennmessers mit dieser mindestens einen Hochspannungskomponente verbunden sein. Folglich ist hierdurch die mindestens eine Hochspannungskomponente mit der von dem Stromabnehmer abgegriffenen Oberleitungsspannung verbunden.

Es ist auch denkbar, dass sich dieser elektrische Kontakt auf einem Stützisolator, einem Durchführungsisolator, einem Überspannungsableiter, einem Spannungswandler und/oder einem Stromwandler befindet. In diesem Fall ist das zweite Ende des Trennmessers mit einem Stützisolator, einem Durchführungsisolator, einem Überspannungsableiter, einem Spannungswandler und/oder einem Stromwandler verbunden. Gemäß noch einer anderen Ausgestaltung ist ein zweites Ende des Trennmessers im geöffneten Zustand des Trennermoduls elektrisch mit der Erdung des Schienenfahrzeugs verbunden. In diesem Fall ist als Bestandteil des Trennermoduls ein dritter Pol vorhanden, zu dem wie zu dem zweiten Pol über eine mechanische Berührung eine elektrische Verbindung mit dem Trennmesser hergestellt werden kann. Dieser dritte Pol ist mit der Erdung des Schienenfahrzeugs verbunden und liegt damit auf Erdpotenzial. Bei der Öffnung des Trennermoduls wird also die Verbindung zwischen Trennmesser und dem zweiten Pol aufgehoben und eine Verbindung zwischen dem Trennmesser und dem dritten Pol hergestellt. Da das Trennmesser immer noch mit dem ersten Pol verbunden ist, welcher wiederum mit dem Stromabnehmer elektrisch verbunden ist, folgt hieraus, dass der Stromabnehmer in diesem Zustand ebenfalls geerdet ist. Beim Schließen des Trennermoduls wird die Verbindung des Trennmessers mit dem dritten Pol wieder aufgehoben und eine Verbindung zwischen dem Trennmesser und dem zweiten Pol hergestellt.

Auch ist es denkbar, dass der mindestens eine Antrieb ein hydraulischer bzw. pneumatischer Antrieb ist. Das bedeutet, dass der Antrieb mit Hilfe von Öl- oder Wasserdruck bzw. mit Hilfe von Luftdruck erfolgt.

Es ist auch denkbar, dass der mindestens eine Antrieb ein elektrischer Antrieb ist. Das bedeutet, dass der Antrieb mit Hilfe von elektrischer Energie erfolgt.

Gemäß einer anderen Ausgestaltung weist der mindestens eine Antrieb mindestens eine Feder auf, insbesondere eine Rückstellfeder. Die Feder kann durch einen Antrieb des Trennermoduls oder durch einen Antrieb des Stromabnehmers oder mittelbar durch Bewegungen des Stromabnehmers gespannt werden. Beim Schließen des Trennermoduls kann das Trennmesser mit Hilfe einer Antriebsfeder bewegt werden. Es kann auch das Schließen des Trennermoduls durch einen pneumatischen, hydraulischen oder elektrischen Antrieb erfolgen, wobei im Schließvorgang eine Rückholfeder gespannt wird. Beim Öffnen des Trennermoduls kann das Trennmesser dann durch diese Rückholfeder bewegt werden.

Gemäß einer weiteren Lehre der vorliegenden Erfindung wird ein Schienenfahrzeug mit einer soeben beschriebenen Stromabnehmeranordnung angegeben.

Es gibt nun eine Vielzahl von Ausgestaltungen und Weiterbildungen der erfindungsgemäßen Stromabnehmeranordnung. Hierzu sei einerseits verwiesen auf die dem Patentanspruch 1 nachgeordneten Patentansprüche, andererseits auf die Beschreibung eines Ausführungsbeispiels in Verbindung mit der Zeichnung. In der Zeichnung zeigt:
- Fig. 1: ein erstes Ausführungsbeispiel einer Stromabnehmeranordnung gemäß der Erfindung,
- Fig. 2: ein zweites Ausführungsbeispiel einer Stromabnehmeranordnung gemäß der Erfindung,
- Fig. 3: ein drittes Ausführungsbeispiel einer Stromabnehmeranordnung gemäß der Erfindung, und
- Fig. 4: ein viertes Ausführungsbeispiel einer Stromabnehmeranordnung gemäß der Erfindung.

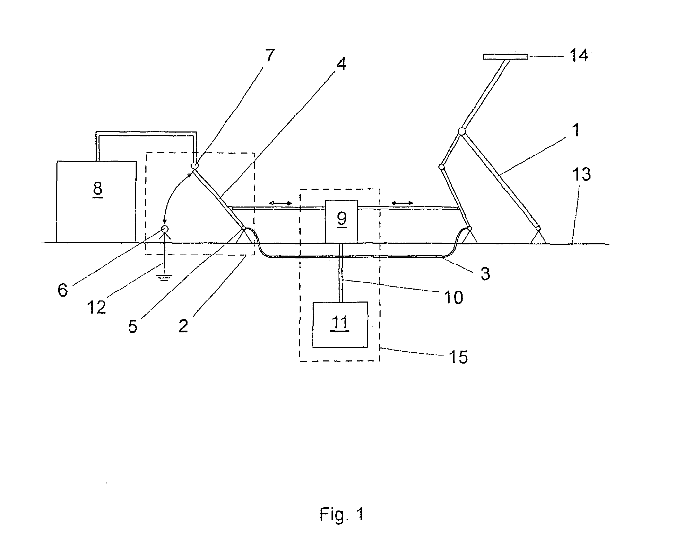

Fig. 1 zeigt schematisch ein erstes Ausführungsbeispiel einer Stromabnehmeranordnung eines Schienenfahrzeugs 13 mit einem Trennermodul 2. Ein Stromabnehmer 1 zur Kontaktierung eines Fahrdrahtes einer Oberleitung, der hier als Einholmstromabnehmer ausgebildet ist, ist auf dem Dach des Schienenfahrzeugs 13 befestigt. Der Stromabnehmer 1 umfasst einen Bügel mit einem Schleifstück 14, wobei das Schleifstück 14 während der Fahrt den Fahrdraht berührt und von diesem den Strom aufnimmt. Der Stromabnehmer 1 kann zur Kontaktierung einer Oberleitung gehoben und zum Unterbrechen des Kontakts mit der Oberleitung gesenkt werden. Dies geschieht über einen hydraulischen Antrieb 15, der eine Antriebsmaschine 11, in diesem Falle einen Elektrcmotor, eine hydraulische Leitung 10, und ein Hydraulikzylindersystem 9 umfasst. Das Hydraulikzylindersystem 9 kann die von der Antriebsmaschine 11 über die hydraulische Leitung 10 gelieferte mechanische Energie in eine Bewegung umsetzen, die den Stromabnehmer 1 heben oder senken kann. Der Stromabnehmer 1 ist ferner elektrisch über ein Verbindungskabel 3 mit einem ersten Pol 5 eines Trennermoduls 2 verbunden, und zwar derart, dass wenn der Stromabnehmer 1 mit dem Schleifstück 14 auf dem Bügel die Oberleitung kontaktiert, der erste Pol 5 des Trennermoduls 2 ebenfalls elektrisch mit der Oberleitung verbunden ist.

Das Trennermodul 2 umfasst neben dem ersten Pol 5 ein Trennmesser 4, welches beweglich mit dem ersten Pol 5 verbunden ist. Das Trennmesser 4 kann eine drehende Bewegung und auch eine verschiebende Bewegung ausführen. Diese Bewegung wird ebenfalls durch das Hydraulikzylindersystem 9 angetrieben. Die Bewegung des Trennmessers 4 durch das Hydraulikzylindersystem 9 erfolgt vorzugsweise automatisch immer dann, wenn das Hydraulikzylindersystem 9 auch den Stromabnehmer 1 hebt oder senkt. Und zwar wird vorzugsweise beim Heben des Stromabnehmers 1 das Trennermodul 2 geschlossen, indem das Trennmesser 4 so bewegt wird, dass es einen zweiten Pol 7 ab einer bestimmten Hubhöhe des Stromabnehmers 1 mechanisch kontaktiert. Beim Senken des Stromabnehmers 1 wiederum wird vorzugsweise das Trennermodul 2 getrennt, indem das Trennmesser 4 so bewegt wird, dass es den zweiten Pol 7 nicht berührt, sondern einen dritten Pol 6 mechanisch kontaktiert. Entsprechend wird die Energie für die Bewegung des Stromabnehmers 1 und für die Bewegung des Trennmessers 4 über die hydraulische Leitung 10 von der Antriebsmaschine 11 bezogen.

Der zweite, vom Trennermodul 2 umfasste Pol 7 ist elektrisch mit einer Hochspannungskomponente, in diesem Fall einem Transformator 8 für das Schienenfahrzeug, verbunden. Der dritte, vom Trennermodul 2 umfasste Pol 6 ist über eine elektrische Verbindung 12 mit der Erdung des Schienenfahrzeugs 13 verbunden.

Im in Fig. 1 dargestellten geschlossenen Zustand des Trennermoduls 2 berührt das Trennmesser 4 mechanisch den Pol 7. Da vorzugsweise gleichzeitig der Stromabnehmer 1 gehoben ist und mit dem Schleifstück 14 des Bügels die Oberleitung kontaktiert, ist somit auch der Pol 7 und folglich der Transformator 8 elektrisch mit der Spannung der Oberleitung verbunden.

Im geöffneten Zustand des Trennermoduls 2 hingegen, welcher nicht dargestellt ist, kann das Trennmesser 4 entweder keinen der beiden Pole 7 oder 6 kontaktieren, oder aber das Trennmesser 4 kann den Pol 6 mechanisch kontaktieren. In dem Fall, dass im geöffneten Zustand des Trennermoduls 2 das Trennmesser 4 den Pol 6 kontaktiert, ist der Stromabnehmer 1 mittelbar über das Trennmesser 4 mit der Erdung 12 des Schienenfahrzeugs 13 verbunden. Vorzugsweise ist gleichzeitig der Stromabnehmer 1 gesenkt und somit das Schleifstück 14 des Bügels von der Oberleitung getrennt. Dies ist insbesondere für Wartungs- oder Reparaturarbeiten am Stromabnehmer 1 oder am Schleifstück 14 des Bügels empfehlenswert.

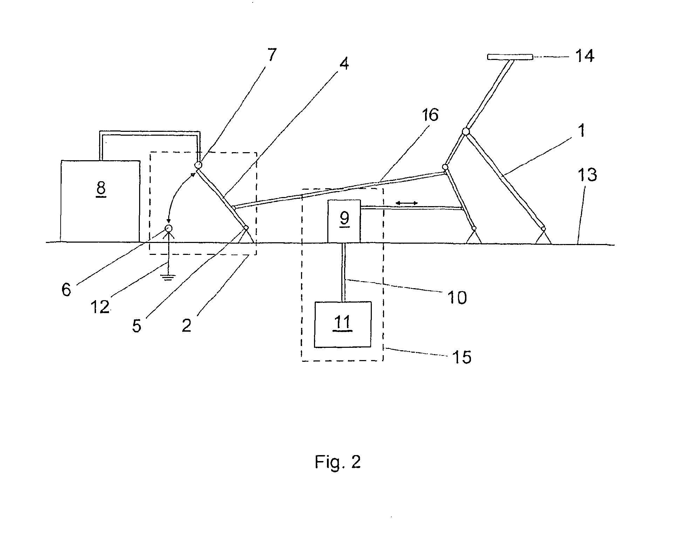

Fig. 2 zeigt schematisch ein zweites Ausführungsbeispiel einer Stromabnehmeranordnung eines Schienenfahrzeugs 13 mit einem Trennermodul 2. Ein Stromabnehmer 1 zur Kontaktierung eines Fahrdrahtes einer Oberleitung ist auch in diesem Ausführungsbeispiel auf dem Dach des Schienenfahrzeugs 13 befestigt und entspricht dem Stromabnehmer 1 aus dem ersten Ausführungsbeispiel. Der Stromabnehmer 1 umfasst einen Bügel mit einem Schleifstück 14 und kann zur Kontaktierung einer Oberleitung gehoben und zum Unterbrechen des Kontakts mit der Oberleitung gesenkt werden. Dies geschieht über einen Antrieb 15, der mechanisch mit dem Stromabnehmer 1 verbunden ist.

Ein Trennermodul 2 umfasst neben dem ersten Pol 5 ein Trennmesser 4, welches beweglich mit dem ersten Pol 5 verbunden ist. Das Trennmesser 4 kann eine drehende Bewegung und auch eine verschiebende Bewegung ausführen. Das Trennermodul 2 kann geschlossen werden, indem das Trennmesser 4 so bewegt wird, dass es einen zweiten Pol 7 ab einer bestimmten Hubhöhe des Stromabnehmers 1 mechanisch kontaktiert. Das Trennermodul 2 kann darüber hinaus getrennt werden, indem das Trennmesser 4 so bewegt wird, dass es den zweiten Pol 7 nicht berührt, sondern einen dritten Pol 6 mechanisch kontaktiert.

Der Stromabnehmer 1 ist mechanisch über ein Verbindungselement 16, hier eine Gelenkstange, mit einem Trennmesser 4 des Trennermoduls 2 verbunden und zwar dergestalt, dass ein Heben des Stromabnehmers 1 eine Bewegung des Trennmessers 4 verursacht, durch die ein mechanischer Kontakt zum zweiten Pol 7 hergestellt und damit das Trennermodul 2 geschlossen wird. Darüber hinaus bewirkt das Verbindungselement 16, dass ein Senken des Stromabnehmers 1 eine Bewegung des Trennmessers 4 verursacht, durch die ein mechanischer Kontakt zum dritten Pol 6 hergestellt und damit das Trennermodul 2 getrennt wird.

Der Stromabnehmer 1 ist ferner elektrisch mit dem ersten Pol 5 verbunden. Diese elektrische Verbindung kann über das Verbindungselement 16 erfolgen, sie kann aber auch auf einem anderen Wege erfolgen, beispielsweise über ein hier nicht dargestelltes Kabel zwischen dem Stromabnehmer 1 und dem ersten Pol 5.

Der zweite, vom Trennermodul 2 umfasste Pol 7 ist elektrisch mit einer Hochspannungskomponente, in diesem Fall ebenfalls einem Transformator 8 für das Schienenfahrzeug, verbunden. Der dritte, vom Trennermodul 2 umfasste Pol 6 ist über eine elektrische Verbindung mit der Erdung 12 des Schienenfahrzeugs 13 verbunden.

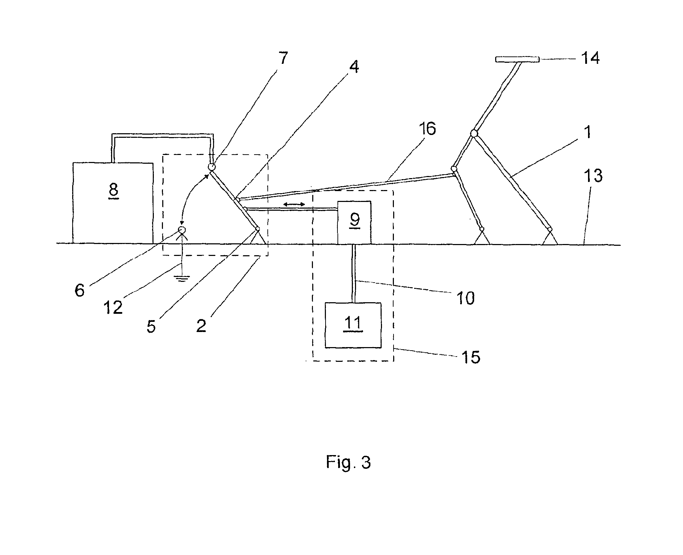

Fig. 3 zeigt schematisch ein drittes Ausführungsbeispiel einer Stromabnehmeranordnung eines Schienenfahrzeugs 13 mit einem Trennermodul 2. Der Stromabnehmer 1 mit einem Bügel mit Schleifstück 14 entspricht in seiner Ausgestaltung und Funktionsweise dem anhand Fig. 2 beschriebenenStromabnehmer 1.

Ein Trennermodul 2 mit einem ersten Pol 5, einem Trennmesser 4, einem zweiten Pol 7 und einem dritten Pol 6 entspricht dem in Fig. 2 dargestellten Trennermodul 2 .

Die Bewegung des Trennmessers 4 geschieht über einen Antrieb 15, der mechanisch mit dem Trennmesser 4 verbunden ist. Bei dem Antrieb 15 kann es sich um einen hydraulischen Antrieb, einen pneumatischen Antrieb oder einen elektrischen Antrieb handeln.

Der Stromabnehmer 1 ist wie im in Fig. 2 dargestellten zweiten Ausführungsbeispiel mechanisch über ein Verbindungselement 16, hier ebenfalls eine Gelenkstange, mit einem Trennmesser 4 des Trennermoduls 2 verbunden und zwar dergestalt, dass eine Bewegung des Trennmessers 4, durch die ein mechanischer Kontakt zum zweiten Pol 7 hergestellt und damit das Trennermodul 2 geschlossen wird, ein Heben des Stromabnehmers 1 verursacht. Darüber hinaus bewirkt das Verbindungselement 16, dass eine Bewegung des Trennmessers 4, durch die ein mechanischer Kontakt zum dritten Pol 6 hergestellt und damit das Trennermodul 2 getrennt wird, ein Senken des Stromabnehmers 1 verursacht.

Wie im in Fig. 2 dargestellten zweiten Ausführungsbeispiel ist der Stromabnehmer 1 elektrisch mit dem ersten Pol 5 und der zweite, vom Trennermodul 2 umfasste Pol 7 elektrisch mit einer Hochspannungskomponente verbunden, nämlich ebenfalls mit einem Transformator 8 für das Schienenfahrzeug. Ebenso ist der dritte, vom Trennermodul 2 umfasste Pol 6 über eine elektrische Verbindung mit der Erdung 12 des Schienenfahrzeugs 13 verbunden.

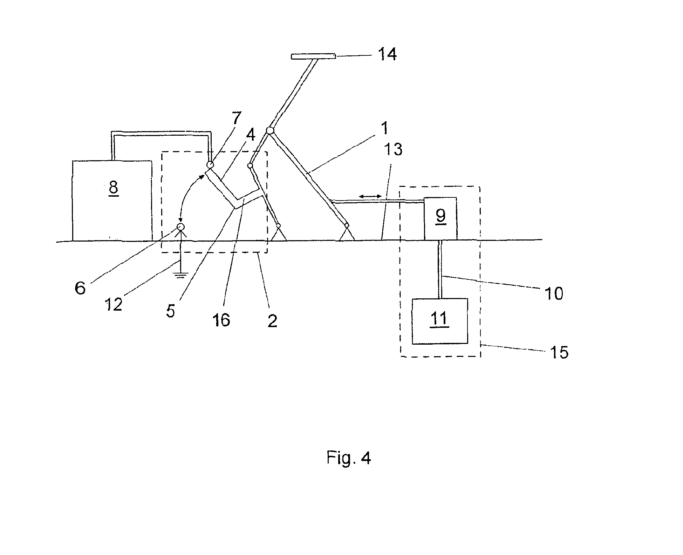

Fig. 4 zeigt schematisch ein viertes Ausführungsbeispiel einer Stromabnehmeranordnung eines Schienenfahrzeugs 13 mit einem Trennermodul 2. Der Stromabnehmer 1 weist ebenfalls einen Bügel mit einem Schleifstück 14 auf. Der Stromabnehmer 1 kann über einen Antrieb 15, der mechanisch mit dem Stromabnehmer 1 verbunden ist, gehoben und gesenkt werden. Über ein Verbindungselement 16 ist ein Trennmesser 4 eines Trennermoduls 2 mit dem Stromabnehmer 1 sowohl mechanisch als auch elektrisch verbunden.

Das Trennermodul 2 umfasst neben dem Trennmesser 4 einen ersten Pol 5 an der Verbindungsstelle zwischen Trennmesser 4 und dem Verbindungselement 16. Das Trennmesser 4 führt eine Bewegung aus, wann immer sich der Stromabnehmer 1 hebt oder senkt. Das Trennermodul 2 kann geschlossen werden, indem das Trennmesser 4 durch das Heben des Stromabnehmers 1 so bewegt wird, dass es einen zweiten Pol 7 ab einer bestimmten Hubhöhe des Stromabnehmers 1 mechanisch kontaktiert. Das Trennermodul 2 kann darüber hinaus getrennt werden, indem das Trennmesser 4 durch das Senken des Stromabnehmers 1 so bewegt wird, dass es den zweiten Pol 7 nicht berührt, sondern einen dritten Pol 6 mechanisch kontaktiert.

Der zweite, vom Trennermodul 2 umfasste Pol 7 ist elektrisch mit einer Hochspannungskomponente, ebenfalls in Form eines Transformators 8 für das Schienenfahrzeug, verbunden. Der dritte, vom Trennermcdul 2 umfasste Pol 6 ist über eine elektrische Verbindung mit der Erdung 12 des Schienenfahrzeugs 13 verbunden.

Da die in Rede stehenden Stromabnehmer 1 häufig einen bestimmten Bewegungsbereich für das Ausgleichen unterschiedlicher Fahrdrahthöhen im Betrieb aufweisen, ist es vorteilhaft, wenn auch während entsprechender vertikaler Ausgleichsbewegungen eine elektrische Verbindung zum Trennermodul 2 gewährleistet ist.

Dies könnte bei der in Fig. 4 dargestellten Anordnung beispielsweise durch einen entsprechend breiten Kontaktbereich, insbesondere ein entsprechend breites Schleifsegment, oder durch federnd nachgiebige Kontakte bzw. Pole ermöglicht werden. Derselbe Effekt kann auch dann erreicht werden, wenn die mechanische Verbindung zum Trennermesser 4 so ausgebildet ist, dass ab Erreichen einer bestimmten Hubhöhe des Stromabnehmers 1 und Kontakt zwischen Trennermesser 4 und Pol 7 keine weitere Mitnahme (Ortsveränderung) des Trennermessers 4 mehr erfolgt. Dann kann sich der Stromabnehmer 1 in den vorgegebenen Grenzen seines Arbeitsbereichs frei auf- und niederbewegen, ohne dass das Trennermesser 4 bewegt wird. Eine Mitnahme des Trennermessers 4, nämlich im Sinne von Öffnen, muss erst dann wieder einsetzen, wenn der Stromabnehmer 1 eine festgelegte untere Position unterschreitet die etwas unterhalb der zulässigen unteren Arbeitsposition liegen sollte.

Für das Erreichen des unteren Pols 6 kann dasselbe gelten: Das Trennermesser 4 kann den Pol 6 beim Absenken des Stromabnehmers 1 kontaktieren, bevor dieser seine abgesenkte Endlage erreicht hat. Der Kontakt könnte bis zum vollständigen Absenken beibehalten werden durch Vorsehen eines breiten Kontaktbereichs, eines federnd nachgiebigen Pols 6 oder eines Endes der Mitnahme des Trennermessers 4 nach erster Kontaktierung mit dem Pol 6, und zwar unter Aufrechterhaltung des Kontaktdrucks.

Die vorgenannten technischen Möglichkeiten zur Gewährleistung einer elektrischen Verbindung zum Trennermodul 2 auch bei entsprechenden vertikalen Ausgleichsbewegungen können auch bei den in Fig. 1 und Fig. 2, teilweise auch Fig. 3, dargestellten Ausführungsbeispielen vorgesehen werden. Bei dem Ausführungsbeispiel in Fig. 3 arbeitet allerdings der Antrieb 15 auf das Trennermesser 4 und daher wird der Stromabnehmer 1 erst mittelbar über die Verbindung 16 bewegt, weshalb in diesem Fall die Variante eines Endes der Mitnahme des Trennermessers 4 nach erster Kontaktierung mit dem jeweiligen Pol nicht sinnvoll ist.

## Patentansprüche

1. Stromabnehmeranordnung für ein Schienenfahrzeug (13)
- mit mindestens einem Stromabnehmer (1),
- mit einem Trennermodul (2), das ein über ein erstes Ende elektrisch mit dem Stromabnehmer (1) verbundenes Trennmesser (4) aufweist,
- wobei mindestens ein Antrieb (15) vorgesehen ist, über den der Stromabnehmer (1) und das Trennmesser (4) des Trennermoduls (2) mit derselben Antriebsenergieart beaufschlagbar sind,
**dadurch gekennzeichnet, dass** der Stromabnehmer (1) und das Trennmesser (4) einen gemeinsamen Antrieb (15) aufweisen.

2. Stromabnehmeranordnung nach Anspruch 1, **dadurch gekennzeichnet, dass** das Trennmesser (4) des Trennermoduls (2) mit dem Stromabnehmer (1) über ein Verbindungselement (16), vorzugsweise mechanisch, verbunden ist.

3. Stromabnehmeranordnung nach Anspruch 1 oder 2, **dadurch gekennzeichnet, dass** der Antrieb (15) mit dem Stromabnehmer (1) verbunden ist.

4. Stromabnehmeranordnung nach einem der Ansprüche 1 bis 3, **dadurch gekennzeichnet, dass** der Antrieb (15) mit dem Trennmesser (4) verbunden ist.

5. Stromabnehmeranordnung nach einem der Ansprüche 1 bis 4, **dadurch gekennzeichnet, dass** das Trennermodul (2) zumindest teilweise in den Stromabnehmer (1) integriert ist.

6. Stromabnehmeranordnung nach einem der Ansprüche 1 bis 5, **dadurch gekennzeichnet, dass** das Trennermodul (2) zumindest teilweise als Baugruppe an den Stromabnehmer (1) angebaut ist.

7. Stromabnehmeranordnung nach einem der Ansprüche 1 bis 6, **dadurch gekennzeichnet, dass** das Trennmesser (4) drehbar und/oder verschiebbar gelagert ist.

8. Stromabnehmeranordnung nach einem der Ansprüche 1 bis 7, **dadurch gekennzeichnet, dass** ein zweites Ende des Trennmessers (4) im geschlossenen Zustand des Trennermoduls (2) über einen elektrischen Kontakt (7) mit mindestens einer Hochspannungskomponente (8) verbunden ist.

9. Stromabnehmeranordnung nach Anspruch 8, **dadurch gekennzeichnet, dass** der elektrische Kontakt (7) sich auf einem Stützisolator, einem Durchführungsisolator, einem Überspannungsableiter, einem Spannungswandler und/oder einem Stromwandler befindet.

10. Stromabnehmeranordnung nach einem der Ansprüche 1 bis 9, **dadurch gekennzeichnet, dass** ein zweites Ende des Trennmessers (4) im geöffneten Zustand des Trennermoduls (2) elektrisch mit der Erdung (12) des Schienenfahrzeugs (13) verbunden ist.

11. Stromabnehmeranordnung nach einem der Ansprüche 1 bis 10, **dadurch gekennzeichnet, dass** der Antrieb (15) ein hydraulischer Antrieb ist.

12. Stromabnehmeranordnung nach einem der Ansprüche 1 bis 10, **dadurch gekennzeichnet, dass** der Antrieb (15) ein pneumatischer Antrieb ist.

13. Stromabnehmeranordnung nach einem der Ansprüche 1 bis 10, **dadurch gekennzeichnet, dass** der Antrieb (15) ein elektrischer Antrieb ist.

14. Stromabnehmeranordnung nach einem der Ansprüche 1 bis 13, **dadurch gekennzeichnet, dass** der Antrieb (15) mindestens eine Feder, insbesondere eine Rückstellfeder, aufweist.

15. Schienenfahrzeug (13) mit einer Stromabnehmeranordnung nach einem der Ansprüche 1 bis 14.

## Claims

1. A pantograph assembly for a rail vehicle (13)
- with at least one pantograph (1) and
- with an isolation module (2) with an isolating blade (4), a first end of which is electrically connected to the pantograph (1),
- wherein at least one drive (15) is provided which can act upon the pantograph (1) and the isolating blade (4) of the isolation module (2) with the same type of drive energy,
**characterized in that** the pantograph (1) and the isolating blade (4) feature a common drive (15).

2. The pantograph assembly according to Claim 1,
**characterized in that** the isolating blade (4) of the isolation module (2) is, preferably mechanically, connected to the pantograph (1) by means of a connecting element (16).

3. The pantograph assembly according to Claim 1 or 2,
**characterized in that** the drive (15) is connected to the pantograph (1).

4. The pantograph assembly according to one of Claims 1 to 3, **characterized in that** the drive (15) is connected to the isolating blade (4).

5. The pantograph assembly according to one of Claims 1 to 4, **characterized in that** the isolation module (2) is at least partially integrated into the pantograph (1).

6. The pantograph assembly according to one of Claims 1 to 5, **characterized in that** the isolation module (2) is at least partially attached to the pantograph (1) in the form of a group of components.

7. The pantograph assembly according to one of Claims 1 to 6, **characterized in that** the isolating blade (4) is supported in a rotatable and/or displaceable fashion.

8. The pantograph assembly according to one of Claims 1 to 7, **characterized in that** a second end of the isolating blade (4) is connected to at least one high-voltage component (8) via an electric contact (7) in the closed state of the isolation module (2).

9. The pantograph assembly according to Claim 8, **characterized in that** the electric contact (7) is situated on a support insulator, a bushing insulator, a surge protector, a voltage transformer and/or a current transformer.

10. The pantograph assembly according to one of Claims 1 to 9, **characterized in that** a second end of the isolating blade (4) is electrically connected to the grounding (12) of the rail vehicle (13) in the open state of the isolation module (2).

11. The pantograph assembly according to one of Claims 1 to 10, **characterized in that** the drive (15) is a hydraulic drive.

12. The pantograph assembly according to one of Claims 1 to 10, **characterized in that** the drive (15) is a pneumatic drive.

13. The pantograph assembly according to one of Claims 1 to 10, **characterized in that** the drive (15) is an electric drive.

14. The pantograph assembly according to one of Claims 1 to 13, **characterized in that** the drive (15) comprises at least one spring, particularly a return spring.

15. A rail vehicle (13) with a pantograph assembly according to one of Claims 1 to 14.

## Revendications

1. Construction de pantographe pour un véhicule ferroviaire (13)
- avec au moins un pantographe (1),
- avec un module sectionneur (2) qui présente une barrette de sectionnement (4) raccordée électriquement au pantographe (1) par une première extrémité,
- étant prévu au moins un organe de commande (15) qui permet de solliciter le pantographe (1) et la barrette de sectionnement (4) du module sectionneur (2) avec le même type d'énergie motrice,
**caractérisé en ce que** le pantographe (1) et la barrette de sectionnement (4) présentent un organe de commande commun (15).

2. Construction de pantographe selon la revendication 1, **caractérisé en ce que** la barrette de sectionnement (4) du module sectionneur (2) est raccordée au pantographe (1), de préférence mécaniquement, par un élément de raccordement (16).

3. Construction de pantographe selon la revendication 1 ou 2, **caractérisé en ce que** l'organe de commande (15) est raccordé au pantographe (1).

4. Construction de pantographe selon une des revendications 1 à 3, **caractérisé en ce que** l'organe de commande (15) est raccordé à la barrette de sectionnement (4).

5. Construction de pantographe selon une des revendications 1 à 4, **caractérisé en ce que** le module sectionneur (2) est intégré au moins partiellement dans le pantographe (1).

6. Construction de pantographe selon une des revendications 1 à 5, **caractérisé en ce que** le module sectionneur (2) est monté au moins partiellement sous forme de sous-ensemble sur le pantographe (1).

7. Construction de pantographe selon une des revendications 1 à 6, **caractérisé en ce que** le module sectionneur (2) est pivotant et/ou déplaçable.

8. Construction de pantographe selon une des revendications 1 à 7, **caractérisé en ce qu**'une seconde extrémité du module sectionneur (2), en position fermée du module sectionneur (2), est raccordée par un contact électrique (7) à au moins un composant de haute tension (8).

9. Construction de pantographe selon la revendication 8, **caractérisé en ce que** le contact électrique (7) se trouve sur un isolateur de soutien, un isolateur de passage, une dérivation de surtension, un convertisseur de tension et/ou un transformateur de courant.

10. Construction de pantographe selon une des revendications 1 à 9, **caractérisé en ce qu**'une seconde extrémité du module sectionneur (2), en position ouverte du module sectionneur (2), est raccordée électriquement à la prise de terre (12) du véhicule ferroviaire (13).

11. Construction de pantographe selon une des revendications 1 à 10, **caractérisé en ce que** l'organe de commande (15) est un organe de commande hydraulique.

12. Construction de pantographe selon une des revendications 1 à 10, **caractérisé en ce que** l'organe de commande (15) est un organe de commande pneumatique.

13. Construction de pantographe selon une des revendications 1 à 10, **caractérisé en ce que** l'organe de commande (15) est un organe de commande électrique.

14. Construction de pantographe selon une des revendications 1 à 13, **caractérisé en ce que** l'organe de commande (15) présente au moins un ressort, en particulier un ressort de rappel.

15. Véhicule ferroviaire (13) équipé d'une construction de pantographe selon une des revendications 1 à 14.
